# EUROPEAN PATENT SPECIFICATION

(11) **EP 3 064 555 B1**
(45) Date of publication and mention of the grant of the patent: **28.11.2018**
(21) Application number: 16158308.3
(22) Date of filing: 02.03.2016
(51) Int. Cl.: C09D 5/03, C09D 167/06, C09D 177/00, C08K 5/00

(54) **THERMOSETTING POWDER COATING COMPOSITION**
WÄRMEHÄRTENDE PULVERBESCHICHTUNGSZUSAMMENSETZUNG
COMPOSITION DE REVÊTEMENT EN POUDRE THERMODURCISSABLE

(30) Priority: 03.03.2015 IT MI20150313
(43) Date of publication of application: 07.09.2016
(73) Proprietor: Pulverit S.p.A., 20157 Milano (IT)
(72) Inventor: BELLUCCO, Francesco, I-20138 Milano (IT)
(74) Representative: De Gregori, Antonella

(56) References cited:
- WO-A1-2010/108962
- CN-A- 103 570 930
- US-A1- 2011 269 908

## Description

The present invention relates to a coating composition in thermosetting powder.

More specifically, the present invention relates to a coating composition (or paint) in thermosetting powder having an excellent versatility and curability or which can be polymerized at a low temperature and which forms, after polymerization, a coating film having excellent aesthetic features (such as gloss and clarity), with excellent physical properties (for example impact strength, chipping resistance, scratch resistance and optimum adhesiveness), colour resistance to yellowing, weather resistance, UV-light resistance and excellent chemical resistance (resistance to acids and solvents, for example).

The present invention also relates to a coating method with said coating composition or paint and to an article coated with said coating composition or paint.

More specifically, the present invention falls within the field of coating compositions in thermosetting powder.

It should be remembered that for coating three-dimensional articles, above all when destined for applications (for example in the automotive field) for which there are extremely strict requirements in terms of quality of the final product, paints have been developed which satisfy these particularly strict requisites. These, however, are almost exclusively solvent-based paints, as the coating compositions in thermosetting powders according to the state of the art, generally powders based on saturated polyester resins and/or based on epoxy resins, do not have physico-chemical properties comparable to those of solvent-based paints, for example mainly with respect to weather resistance (resistance to acid rain) and resistance to solvents.

Furthermore, as they are thermosetting coating compositions, they require temperatures in the order of 160°C-200°C and times ranging from 10 to 15 minutes approximately in order to obtain a complete crosslinking/polymerization.

Recently, however, national and international regulations relating health protection, health and safety at work, environmental protection, fire and explosion prevention, have imposed growing restrictions in the use of organic solvents in coating compositions, such as, for example, coating or protective compositions. In particular, restrictions relating to pollution have reduced the extent of use of coatings based on solvents and require the development of new types of coating products or paints, which do not pollute, or, in any case, reduce air pollution to the minimum. At the same time, it is necessary, however, that the resin forming the base (the binder) of the paint be formulated so as to give a coating-film having a good resistance to weather conditions, abrasion and solvents.

Over the years, this tendency has therefore led to the emergence of alternative solutions such as aqueous-based coating compositions in which the traditional organic solvent has been substituted by water and/or has led to the search for coating compositions in powder form which satisfy the severe qualitative requisites mainly required by applications on three-dimensional metal or non-metal articles, mainly used outside.

UV-crosslinkable compositions, mainly based on unsaturated polyesters are known and used within the field of coating compositions in powder form. These, however, are coating compositions which are substantially used and usable on wood bases and only on products that do not have a complex three-dimensional structure. Unsaturated polyester, in fact, is crosslinked by increasing the molecular weight through a radical mechanism, wherein the formation of the free radical takes place due to the action of UV radiation which strikes the coated piece.

It is therefore evident, for example, that in the areas of the piece not struck by UV radiation, polymerization cannot take place and consequently the product obtained does not satisfy the necessary qualitative requirements, mainly if the product is three-dimensional and not flat.

An objective of the invention is therefore to find a thermosetting coating composition in powder form which overcome the drawbacks of the coating compositions in thermosetting powder of the known art.

More specifically, the objective of the present invention is to find a thermosetting coating composition in powder form which has an excellent versatility, curability at low temperatures and which forms, after polymerization, a coating film with excellent aesthetic features (such as gloss and clarity), with excellent physical properties (for example impact strength, chipping resistance, scratch resistance and optimum adhesiveness), colour resistance to yellowing, weather resistance, UV-light resistance and excellent chemical resistance (for example, resistance to acids and solvents).

US,A,2011 0269908 discloses a 1-component heat-curable powder coating composition.

WO-A-2010/108962 discloses unsaturated polyester resin composition, whilst CN-A-103 570 930 discloses preparation of unsaturated polyester.

These objectives and more are achieved by the object of the present invention.

The object of the present invention relates to a thermosetting coating composition in powder form, comprising:
- an unsaturated polymer selected from polyesters or polyamides or mixtures thereof, said polymer having a Tg ranging from 50 to 70°C, a viscosity ranging from 2 to 9 Pa.s (2,000 to 9,000 centiPoise) at 200°C, preferably from 2.5 to 4.5 (2,500 to 4,500), a melting temperature ranging from 60 to 80°C, with polar functional groups with an acidity number ranging from 5 to 60 mg KOH/g, preferably from 20 to 50 mg KOH/g, and with a hydroxyl number ranging from 0 to 20 mg KOH/g, preferably from 2 to 10 mg KOH/g;
- a catalyst/initiator which is an organic peroxide selected from di-alkyl peroxy-carbonates, tert-alkyl peroxyesters, di-tert-alkyl peroxy-ketals, di-tert-alkyl peroxy-ethers, having a halving temperature after 10 hours ranging from 49°C to 140°C;
- a free radical absorber which is selected from hydroquinone, 1,4-dihydroxybenzene and/or its derivatives, or compounds belonging to the HALS family having a melting point ranging from 50 to 90°C.

A further object of the present invention relates to the coating method of a substrate with said coating composition and the article coated with said coating composition.

The unsaturated polymer is preferably an unsaturated polyamide obtained by the polycondensation of unsaturated dicarboxylic acids and monosubstituted aliphatic diamines or monosubstituted cycloaliphatic diamines.

The unsaturated preferred polyamide has a hydroxyl number < 5 mg KOH/g, an acidity number ranging from 20 to 50 mg KOH/g, a viscosity ranging from 2.5 to 4.5 Pa.s (2,500 to 4,500 centiPoise) at 200°C, a Tg ranging from 52 to 60°C, a melting temperature ranging from 60 to 70°C; more preferably, the unsaturated polyamide has a hydroxyl number < 5 mg KOH/g, an acidity number ranging from 35 to 50 mg KOH/g, a viscosity ranging from 2.5 to 3.7 Pa.s (2,500 to 3,700 centiPoise) at 200°C, a Tg ranging from 54 to 58°C, a melting temperature ranging from 60 to 67°C, with a number of insaturations (expressed as molecular weight per double bond) ranging of from 150 to 2000, preferably between 400 and 1800.

The polar functional groups are -OH, -COOH, and -CON(R₁)(R₂) groups, present in such a quantity as to guarantee that the unsaturated polymer "wets" fillers and pigments, when present.

The organic peroxide of the coating composition according to the present invention is preferably selected from benzoyl peroxide, tert-butyl peroxyacetate, tert-butyl peroxybenzoate, and dicumyl peroxide. Among the compounds indicated as catalysts, compounds having a longer pot-life are preferred, so as to allow a storage of the end-product for times longer than 6 months with temperatures not higher than 30°C.

The preferred free radical absorber of the coating composition according to the present invention is tert-butyl hydroquinone (TBHC).

An additional quantity of benzoin can also be used which also acts as free radical absorber.

The coating composition according to the present invention preferably comprises:
- the unsaturated polymer in a quantity ranging from 50 to 98% by weight with respect to the total weight of the composition;
- the catalyst in a quantity ranging from 0.01 to 1% by weight with respect to the total weight of the composition;
- the free radical absorber in a quantity ranging from 0.01 to 1% by weight with respect to the total weight of the composition;
- the pigment and/or filler in a quantity ranging from 0 to 48% by weight with respect to the total weight of the composition.

In addition to the components listed above, the coating composition in thermosetting powder can therefore also comprise pigments and fillers.

The pigments used in the coating composition according to the present invention are selected from:
- organic pigments such as PY14 (CAS 5468-75-7), PO36 (CAS 12236-62-3), PO73 (CAS 8462-59-7), PY194 (82199-12-0), PY83 (CAS 5567-15-7), PO34 (CAS 239-898-6), PY154 (CAS 68134-22-5), PO13 (CAS 3520-72-7), PY139 (CAS 36888-99-0), PV19 (CAS 1047-16-1), PR48:3 (CAS 15782-05-5), PV23 (CAS 6358-30-1), PR57:1 (CAS 5281-04-09), PR122 (CAS 980-26-7), PR188 (CAS 61847-48-1), PR146 (CAS 5280-68-2), PR254 (CAS 84632-65-5), PR170 (CAS 2786-76-7), PG7 (CAS 1328-53-6), PB15:1 (CAS 147-14-8), PB15:3 (CAS 147-14-8); and/or
- inorganic pigments such as: Titanium Dioxide (CAS 13463-67-7), *PY42 (*CAS 20344-49-4*), PY53 (*CAS 8007-18-9*), py42 (*CAS 51274-00-1), PB24 (CAS 68186-90-3), PY184 (CAS 14059-33-7), PR101 (CAS 1309-37-1), PV15 (12769-96-9), PG17 (CAS 14302-13-7), PB29 (CAS 101357-30-6), PB7 (CAS1333-86-4), PB11 (CAS 1317-61-9) .

The fillers used in the coating composition according to the present invention are selected from: Natural Barium Sulfate (CAS 7727-43-7), precipitated Barium Sulfate (CAS 7727-43-7), Calcium Carbonate (CAS 471-34-1), Talc (CAS 14807-96-6), Aluminium Hydroxide (CAS 21645-51-2), Nepheline (CAS 37244-96-5) and/or mixtures thereof.

The coating composition according to the present invention may comprise further additional components in a quantity which can at the most be equal to 2% by weight with respect to the total weight of the composition and said additional components are:
- benzoin or PhCH(OH)C(O)Ph in a quantity ranging from 0.30 to 0.70% by weight with respect to the total weight of the composition;
- polyethylene wax in a quantity ranging from 0.10 to 0.30% by weight with respect to the total weight of the composition;
- polyacrylate in a quantity ranging from 0.10 to 1% by weight with respect to the total weight of the composition.

The preferred coating composition according to the present invention consists of:
- an unsaturated polyamide having an OH number < 5 mg KOH/g, an acidity number of 20-50 mg KOH/g, a viscosity ranging from 2.5 to 4.5 Pa.s (2,500 to 4,500 cP) at 200°C, a Tg ranging from 52°C to 60°C and a melting temperature ranging from 60°C to 70°C in a quantity ranging from 50 to 98% by weight with respect to the total weight of the composition;
- dicumyl peroxide in a quantity ranging from 0.8 to 1.0% by weight with respect to the total weight of the composition;
- tert-butyl-hydroquinone in a quantity ranging from 0.05 to 0.10% by weight with respect to the total weight of the composition;
- pigment and/or filler in a quantity ranging from 0 to 48% by weight with respect to the total weight of the composition;
- benzoin or PhCH(OH)C(O)Ph in a quantity ranging from 0.40 to 0.70% by weight with respect to the total weight of the composition;
- polyethylene wax in a quantity ranging from 0.20 to 0.30% by weight with respect to the total weight of the composition;
- polyacrylate in a quantity ranging from 0.40 to 1.00% by weight with respect to the total weight of the composition.

The quantity of pigment and/or filler varies within a particularly wide range which mainly depends on the colour of the coating composition. In the case of a white coating composition, for example, the pigment is present in a quantity equal to approximately 25% by weight with respect to the total weight of the composition, whereas in the case of a black coating composition, the pigment is present in a quantity equal to approximately 1% by weight and the filler in a quantity equal to approximately 24% by weight, said percentages indicated with respect to the total weight of the coating composition.

An object of the present invention also relates to the method for coating a substrate which comprises the depositing and adhesion of a coating composition in thermosetting powder according to the present invention, on the substrate to be coated and the polymerization of the coating composition deposited at a temperature ranging from 100 to 120°C, preferably from 100 to 110°C, for a time ranging from 5 to 10 minutes, preferably from 7 to 10 minutes.

The coating composition in thermosetting powder according to the present invention is particularly advantageous as, thanks to its particular formulation, it enables the advantages of the UV polymerization to be combined with the inherent advantages of thermosetting powder paints which are applied in a traditional hot-air oven.

The organic peroxide, present as catalyst in the coating composition according to the present invention, in fact, thermally decomposes and generates a free radical which triggers the polymerization reaction.

The unsaturated polymer, preferably the unsaturated polyamide of the coating composition according to the present invention, crosslinks/polymerizes, increasing the molecular weight, with a radical mechanism, where the formation of the free radical is initiated due to the thermal decomposition of the peroxide, and not, on the contrary, due to the effect of the UV radiation, as in the case previously described of coating compositions in UV-curing powder.

As the polymerization is a radical polymerization, it consequently takes place at a much higher rate with respect to addition or condensation kinetics. Furthermore, the temperature to which the article must be brought, on which the coating composition according to the present invention has been applied, is much lower. It is in fact sufficient to bring the article to a temperature of 100-120°C against the 180°C-200°C necessary in the case of a traditional thermosetting coating composition according to the state of the art.

It is in fact sufficient to melt the powder covering the article to give the polymer mobility, whereas the actual polymerization reaction takes place, as already mentioned, subsequently and through a radical mechanism initiated by the peroxide by thermal decomposition.

The coating composition in thermosetting powder according to the present invention is therefore particularly advantageous as it reacts at a much lower temperature (100-110°C) with respect to that required for a classical thermosetting powder paint (from 160 to 200°C) and the crosslinking is completed in much shorter times (a few seconds) with respect to the 10-15 minutes of a traditional thermosetting powder paint.

The coating composition in thermosetting powder is also particularly advantageous as, thanks to its particular formulation, the crosslinking/- polymerization, can be obtained in any part of the surface coated with said composition, as it is not necessary for the part to be struck by UV radiation for initiating the radical process.

It is therefore possible to coat three-dimensional articles, even extremely complex, and not only flat articles.

The peroxides used as initiators/catalysts are organic peroxides and are stable up to a temperature of 100-110°C. The stability of the peroxide refers to its tendency to decompose into two radicals R*. The greater the stability of the peroxide, the lesser the tendency will be for it to decompose. This parameter is measured as the temperature at which, after 10 hours, the concentration of peroxide is halved.

The presence of free radical absorbers, i.e. preferably compounds of the family of hydroquinones, allows the life of the peroxide to be prolonged: in fact, they preserve the coating composition in the heating phases of the production process and, during the application phase, they allow the composition to reach, during the melting process on the coated article, an optimum viscosity value before the polymerization phase is initiated. In order to reach a good flow during the melting process, the viscosity of the melt must reach values within the range of 2 to 3.5 Pa.s (2,000-3,500 cP) at 200°C for a time ranging from 3 to 5 minutes. These viscosity values are optimal for having the necessary flow and also for avoiding problems of dripping from the edges.

The coating composition in thermosetting powder according to the present invention also has the great advantage of being able to be applied and crosslinked using the same plants adopted for processing classical thermosetting powder coatings: the final physical form of the coating composition according to the invention (for example, the powder coating composition according to the present invention has a granulometric curve of the type <30 µm (micron): 40%, <73 µm (micron): 90%; <100 µm (micron): 100%) and the application method are, in fact, the same and the product can therefore always be crosslinked in a forced circulation hot-air oven, but with shorter times and lower temperatures, as explained above.

In the description and examples of the present patent application, the viscosity is measured according to the method ASTM D 4287.

In particular, the polymerized coating film according to present invention has the following physical characteristics:
- direct and indirect impact strength (ISO 6272) higher than 25 Kg*cm;
- Erichsen deep drawing (ISO 1520) ≥ 5mm;
- adhesion on metal and MDF (ISO 2409) equal to GT0;
- Wolf-Wilborg hardness (ASTM D 3363) equal to H-4H;
- stone chipping resistance (ISO 20567) is < 2.5.

With respect to the resistance to chemical agents, the polymerized coating film according to the present invention has the following characteristics:
- MEK resistance (ASTM D4752) equal to 150 double coatings without softening of the polymerized film;
- salt spray resistance (ISO 9227): after 500 hours of exposure, the penetration of dew in the cross incision is < 1 mm;
- humidistat (ISO 6227) after 500 hours, absence of blistering, i.e. film unaltered.

With respect to the resistance to atmospheric agents, the polymerized coating film according to the present invention has characteristics equal to or higher than those of a class 2 product, i.e.:
- gloss retention higher than 50% after exposure of 2,000 hours to a Xenon lamp (EN ISO 11341).

### Method for preparing the powder coating composition according to the present invention

First of all, the production process is described for obtaining the coating composition in thermosetting powder according to the present invention, to be subsequently applied to the article to be coated.

The powder coating composition according to the present invention can be prepared by means of equipment which comprises, for example, a mixer or turbomixer, an extruder, one or more calenders and a chipping machine and a grinding mill.

All or part of the components of the composition are dry mixed (30 minutes at 50-150 rpm or turbomixing for 5 minutes at 1,000 rpm). The mixing phase is carried out at a temperature ranging from 15°C to 30°C, with the condition that a substantially homogeneous mixture is obtained.

The conditions to be used in the mixer or turbomixer, in addition to the time and number of revs per minute, can be suitably determined on the basis of the knowledge of a skilled person in the field.

The coating composition according to the present invention is then processed on extruders equipped with temperature control (cooling) for preventing the decomposition of the peroxide. Suitable expedients are also used for the same purpose in the cooling method of the extruded product at the outlet of the extruder head.

For producing the coating composition according to the present invention, it is therefore possible to adopt two alternative methods. The first method comprises:
a) dry mixing of all or part of the components of the coating composition (30 minutes at 50-150 rpm or turbomixing for 5 minutes at 1,000 rpm);
b) extrusion at a controlled temperature (lower than or equal to 100°C for residence times of less than 1 minute);
c) rapid cooling (bringing the material at the outlet of the first calender to a temperature lower than 70°C) ;
d) grinding at a controlled temperature (lower than 30°C to avoid packing problems considering the low Tg of the polymer).

Alternatively, the following steps can be carried out:
a) dry mixing of all the components of the coating composition, excluding the catalyst, (30 minutes at 50-150 rpm or turbomixing for 5 minutes at 1,000 rpm);
b) extrusion at a controlled temperature and addition of the catalyst by dosage at the head of the extruder (lower than or equal to 100°C for residence times of less than 1 minute);
c) rapid cooling (bringing the material at the outlet of the first calender to a temperature lower than 70°C);
d) grinding at a controlled temperature (lower than 30°C to avoid packing problems considering the low Tg of the polymer).

The second alternative of the production process is particularly advantageous as it allows the exposure times of the catalyst (i.e. the peroxide) to high temperatures to be minimized (only the residence time in the extruder), thus preserving the catalyst from the decomposition and increasing its effectiveness during the initial crosslinking phase.

Thus, it is also object of the present invention a process for the production of a coating composition in thermosetting powder according to the present invention, which comprises the following steps:
a) dry mixing of all or part of the components of the coating composition;
b) extrusion at a temperature lower than or equal to 100°C for residence times of less than 1 minute, optionally with dosage at the head of the extruder of the components of the composition not mixed in step a);
c) rapid cooling, bringing the material coming from step c) at the outlet of a first calender to a temperature lower than 70°C;
d) grinding at a temperature lower than 30°C.
In the above process, step a) is preferably carried out in a mixer for 30 minutes at 50-150 rpm or in a turbo-mixer for 5 minutes at 1,000 rpm.

### Coating method and polymerization method

A further object of the present invention is the coating method with said coating composition in thermosetting powder and the article coated with said coating composition.

This method allows a coating film to be formed with the coating composition in thermosetting powder.

In particular, the coating composition in thermosetting powder is adhered to the surface of the article to be coated, i.e. the article on which the coating film is to be formed. The article to be coated can be in any form or any material that resists temperatures ranging from 100°C to 120°C for a few minutes (up to 10 minutes).

The adhesion of the coating composition in thermosetting powder according to the present invention to the article to be coated can be effected by means of coating or electrostatic coating or by coating with the fluid-bed system.

Furthermore, the coating with the coating composition in thermosetting powder according to the present invention can be the only coating applied to the article to be coated or it can be a lower, upper or intermediate coating.

In this case, the coating composition in thermosetting powder according to the present invention can also be applied, in fact, as a lower coating layer and subsequently finished with a liquid solvent or water paint to have a qualitatively excellent result at a surface finish level (distension and gloss).

Once the coating composition in thermosetting powder according to the present invention has been adhered to the article to be coated, it is brought to a temperature ranging from 100 to 120°C, preferably from 100 to 110°C, for a time ranging from 5 to 10 minutes, preferably from 7 to 10 minutes. The peroxide catalyst decomposes, activating the radical polymerization of the polymer and the formation of the coating film, characterized by an excellent adhesiveness, gloss, resistance to atmospheric agents.

Thus, it is further object of the present invention a coating method of a substrate which comprises the depositing and adhesion of a coating composition in thermosetting powder according to the present invention, on the substrate to be coated and polymerization of the coating composition deposited at a temperature ranging from 100 to 120°C, preferably from 100 to 110°C, for a time ranging from 5 to 10 minutes, preferably from 7 to 10 minutes.

The coating composition in thermosetting powder according to the present invention is uniformly applied on the substrate (which can therefore be either a layer of paint or the article to be coated) and then heated so that the polymerization reaction (or crosslinking or curing) can take place.

The organic peroxide, present as catalyst in the coating composition according to the present invention, decomposes thermally and generates a free radical which triggers the polymerization reaction. The unsaturated polymer, preferably the unsaturated polyamide of the coating composition according to the present invention, crosslinks/polymerizes, increasing the molecular weight, through a radical mechanism.

The polymerization is therefore a radical polymerization, thermally activated, which therefore takes place at a much higher rate and a much lower temperature with respect to the conditions necessary in the case of a traditional thermosetting coating composition according to the state of the art.

As indicated above, in fact, it is sufficient to have temperatures ranging from 100 to 120°C, for a time ranging from 5 to 10 minutes, to form a coating film characterized by an excellent adhesiveness, gloss, resistance to atmospheric agents.

It is further object of the present invention an article coated with the coating composition in thermosetting powder that can be obtained with the above disclosed coating method.

It is further object of the present invention a coating film that can be obtained by radical polymerization initialized by thermal decomposition of a coating composition in thermosetting powder according to the present invention.

### Examples

Some examples of coating compositions according to the present invention and some comparative examples are provided hereunder for illustrative purposes of the present invention.

### Example 1

680.5 parts of an unsaturated polyamide (CAS: 63428-84-2), having an OH number < 5 mg KOH/g, an acidity number of 20-26 mg KOH/g, a viscosity equal to 3.2 Pa.s (3,200 cP) at 200°C, a Tg equal to 53°C and a melting temperature equal to 63°C, were dry mixed for 30 minutes at 50-150 rpm with 40 parts of a masterbatch of liquid acrylic polymers (CAS: 26760-85-0; specifically 2-ethylhexyl prop-2-enoate - butyl prop-2-enoate (1:1)) on a hydroxylated polyester base (CAS: 25135-73-3; specifically dimethyl benzene-1,3-dicarboxylate; 2,3-dimethylterephthalic acid; ethylene glycol), 4 parts of liquid acrylic polymer (CAS: 26760-85-0; specifically 2-ethylhexyl prop-2-enoate - butyl prop-2-enoate (1:1)) supported on silica (CAS: 7631-86-9), 15 parts of polyethylene wax (CAS: 8002-74-2), 10 parts of benzoyl peroxide (CAS: 94-36-0), 0.5 parts of hydroquinone (CAS: 123-31-9) and 250 parts of titanium dioxide rutile dye (CAS: 13463-67-7).

The mixture thus obtained was then extruded at a controlled temperature, i.e. a temperature which is such that the material at the outlet of the head of the extruder has not exceeded 105°C, for residence times of less than a minute; the extruded material was subjected to rapid cooling, bringing the material at the outlet of the first calender to a temperature equal to 67°C. The cooled extruded material was then ground at a controlled temperature lower than 30°C, maintained as such by the addition of liquid nitrogen on the chips to be ground.

A white coating composition in thermosetting powder was thus obtained.

### Example 2

650 parts of an unsaturated polyamide (CAS: 63428-84-2), having an OH number < 5 mg KOH/g, an acidity number of 20-26 mg KOH/g, a viscosity equal to 3.2 Pa.s (3,200 cP) at 200°C, a Tg equal to 53°C and a melting temperature equal to 63°C, were dry mixed for 30 minutes at 50-150 rpm with 40 parts of a masterbatch of liquid acrylic polymers (CAS: 26760-85-0; specifically 2-ethylhexyl prop-2-enoate - butyl prop-2-enoate (1:1)) on a hydroxylated polyester base (CAS: 25135-73-3; specifically dimethyl benzene-1,3-dicarboxylate; 2,3-dimethylterephthalic acid; ethylene glycol), 4 parts of liquid acrylic polymer (CAS: 26760-85-0; specifically 2-ethylhexyl prop-2-enoate - butyl prop-2-enoate (1:1)) supported on silica (CAS: 7631-86-9), 5 parts of polyethylene wax (CAS: 8002-74-2), 4 parts of benzoin (CAS 119-53-9), 8 parts of tert-butyl peroxyacetate (CAS 540-88-5), 0.7 parts of tert-butyl hydroquinone (CAS 1948-33-0), 421.7 parts of barium sulfate (CAS 7727-43-7) and 10 parts carbon black dye (CAS 1333-86-4).

Following the same procedure as Example 1, a black coating composition in thermosetting powder was thus obtained.

### Example 3

650 parts of an unsaturated polyamide (CAS: 63428-84-2), having an OH number < 10 mg KOH/g, an acidity number of 42-48 mg KOH/g, a viscosity equal to 4.2 Pa.s (4,200 cP) at 200°C, a Tg equal to 57°C and a melting temperature equal to 65°C, were dry mixed for 30 minutes at 50-150 rpm with 40 parts of a masterbatch of liquid acrylic polymers (CAS: 26760-85-0; specifically 2-ethylhexyl prop-2-enoate - butyl prop-2-enoate (1:1)) on a hydroxylated polyester base (CAS: 25135-73-3; specifically dimethyl benzene-1,3-dicarboxylate; 2,3-dimethylterephthalic acid; ethylene glycol), 4 parts of liquid acrylic polymer (CAS: 26760-85-0; specifically 2-ethylhexyl prop-2-enoate - butyl prop-2-enoate (1:1)) supported on silica (CAS: 7631-86-9), 5 parts of polyethylene wax (CAS: 8002-74-2), 4 parts of benzoin (CAS 119-53-9), 10 parts of dicumyl peroxide (CAS 80-43-3), 0.5 parts of tert-butyl hydroquinone (CAS 1948-33-0), 484.5 parts of barium sulfate (CAS 7727-43-7), 50 parts of Nepheline (CAS 37244-96-5), 5 parts of titanium dioxide (CAS 13463-67-7), 10 parts of yellow iron oxide (CAS 20344-49-4), 2 parts of red iron oxide (CAS 1309-37-1) and 2 parts of carbon black (CAS 1333-86-4) .

Following the same procedure as Example 1, a brown-coloured RAL 8008 coating composition in thermosetting powder was thus obtained.

### Example 4

650 parts of an unsaturated polyamide (CAS: 63428-84-2), having an OH number < 5 mg KOH/g, an acidity number of 45-48 mg KOH/g, a viscosity equal to 3.6 Pa.s (3,600 cP) at 200°C, a Tg equal to 55°C and a melting temperature equal to 63°C, were dry mixed for 30 minutes at 50-150 rpm with 40 parts of a masterbatch of liquid acrylic polymers (CAS: 26760-85-0; specifically 2-ethylhexyl prop-2-enoate - butyl prop-2-enoate (1:1)) on a hydroxylated polyester base (CAS: 25135-73-3; specifically dimethyl benzene-1,3-dicarboxylate; 2,3-dimethylterephthalic acid; ethylene glycol), 4 parts of liquid acrylic polymer (CAS: 26760-85-0; specifically 2-ethylhexyl prop-2-enoate - butyl prop-2-enoate (1:1)) supported on silica (CAS: 7631-86-9), 5 parts of polyethylene wax (CAS: 8002-74-2), 4 parts of benzoin (CAS 119-53-9), 10 parts of dicumyl peroxide (CAS 80-43-3), 0.5 parts of tert-butyl hydroquinone (CAS 1948-33-0), 484.5 parts of barium sulfate (CAS 7727-43-7), 50 parts of Nepheline (CAS 37244-96-5), 5 parts of titanium dioxide (CAS 13463-67-7), 10 parts of yellow iron oxide (CAS 20344-49-4), 2 parts of red iron oxide (CAS 1309-37-1) and 2 parts of carbon black (CAS 1333-86-4) .

Following the same procedure as Example 1, a brown-coloured RAL 8008 coating composition in thermosetting powder was thus obtained.

### Example 5

An article having a three-dimensional form, more specifically a box for the production of electric switchboards, was coated with the coating composition in thermosetting powder obtained as described in the previous examples 1-4, by means of coating or electrostatic coating.

The article coated with the coating composition according to the present invention, was then brought to a temperature of 110°C, for 7 minutes.

The article thus coated with a coating film polymerized according to the present invention is characterized by the physico-chemical properties indicated in the following Tables 1 and 2.

The physico-chemical characteristics of a similar article coated with a coating composition in thermosetting powder according to the state of the art are indicated in the last line of said tables: more specifically, a red-coloured RAL 3000 polyester paint Class 1 TGIC Free (hardened with β-hydroxy alkylamide) was used. Said powder coating composition is based on a saturated polyester resin (SPR), crosslinked by means of a polycondensation process (therefore reversible) in the presence of 5% by weight of β-hydroxy alkylamide (CAS 6334-25-4), said 5% by weight being calculated with respect to the weight of the binding polyester resin.

The difference between the powder coating composition according to the state of the art and the powder coating composition according to the present invention is fundamental in the binding polymer (saturated instead of unsaturated and only of a polyester nature) and in the catalyst (β-hydroxy alkyl amide instead of peroxide).

The difference in the binding system obviously also implies a difference in the growth mechanism of the molecular weight: the coating composition according to the state of the art crosslinks through a polycondensation reaction (reversible), whereas the coating composition according to the present invention crosslinks by means of a radical polymerization (irreversible).

**Table 1**

| | Direct and indirect impact strength (ISO 6272) (kg*cm) | Erichsen deep drawing (ISO 1520) (mm) | Metal and MDF adhesion (ISO 2409) | Wolf-Wilborg hardness (ASTM 3363) | Stone Chipping Resistance (ISO 20567) |
|---|---|---|---|---|---|
| Film coating Example 1 | 35 Kg*cm | 7mm | GT0/GT0 | 2H | <1.5 |
| Film coating Example 2 | 28 Kg*cm | 7 mm | GT0/GT1 | 2H | <2 |
| Film coating Example 3 | 42 Kg*cm | 9mm | GT0/GT1 | 3H | <1.5 |
| Film coating Example 4 | 38 Kg*cm | 8 mm | GT0/GT1 | 2H-3H | <2 |
| 5020/0005 "state of the art" | 27 Kg*cm | 6 mm | GT0/ no adhesion on MDF | HB-H | < 2.5 |

**Table 2**

| | MEK resistance (ASTM D4752) | Salt spray resistance (ISO 9227) (mm) | Humidistat (ISO 6227) | Gloss retention (EN ISO 11341) |
|---|---|---|---|---|
| Film coating example 1 | 170 | <1 mm | No blistering after 800 hours | 61% after 2000 hours |
| Film coating example 2 | 175 | <1 mm | No blistering after 800 hours | 53% after 2000 hours |
| Film coating example 3 | 182 | <0.5 mm | No blistering after 800 hours | 55% after 2000 hours |
| Film coating example 4 | 197 | <0.5 mm | No blistering after 875 hours | 52% after 2000 hours |
| 5020/0005 "state of the art" | 35 | <1 mm | Blistering at 625 hours | 53% after 1000 hours |

It is evident that the article coated with the powder coating compositions according to the present invention has improved overall characteristics and above all much higher adhesiveness and resistance characteristics with respect to the article coated with a thermosetting powder composition according to the state of the art.

In addition, the coating according to the state of the art required a temperature of about 170°C to allow the polymerization of the coating film to take place.

## Claims

1. A coating composition in thermosetting powder, comprising:
- an unsaturated polymer selected from polyesters or polyamides or mixtures thereof, said polymer having a Tg ranging from 50 to 70°C, a viscosity ranging from 2 to 9 Pa.s (2,000 to 9,000 centipoise) at 200°C, a melting temperature ranging from 60 to 80°C, with polar functional groups with an acidity number ranging from 20 to 50 mg KOH/g, and with a hydroxyl number ranging from 0 to 20 mg KOH/g;
- a catalyst/initiator which is an organic peroxide selected from di-alkyl peroxy-carbonates, tert-alkyl peroxyesters, di-tert-alkyl peroxy-ketals, di-tert-alkyl peroxy-ethers, having a halving temperature after 10 hours ranging from 49°C to 140°C;
- a free radical absorber which is selected from hydroquinone, 1,4-dihydroxybenzene and/or its derivatives, or compounds belonging to the HALS family having a melting point ranging from 50 to 90°C.

2. The coating composition according to claim 1, wherein the unsaturated polymer is an unsaturated polyamide obtained by the polycondensation of unsaturated dicarboxylic acids and monosubstituted aliphatic diamines or monosubstituted cycloaliphatic diamines.

3. The coating composition according to one or more of the previous claims, wherein the organic peroxide is selected from benzoyl peroxide, tert-butyl peroxyacetate, tert-butyl peroxybenzoate, and dicumyl peroxide.

4. The coating composition according to one or more of the previous claims, wherein the free radical absorber is tert-butyl hydroquinone (TBHC).

5. The coating composition according to one or more of the previous claims, comprising:
- the unsaturated polymer in a quantity ranging from 50 to 98% by weight with respect to the total weight of the composition;
- the catalyst in a quantity ranging from 0.01 to 1% by weight with respect to the total weight of the composition;
- the free radical absorber in a quantity ranging from 0.01 to 1% by weight with respect to the total weight of the composition;
- the pigment and/or filler in a quantity ranging from 0 to 48% by weight with respect to the total weight of the composition.

6. The coating composition according to one or more of the previous claims, wherein additional components are present in a quantity which at the most can be equal to 2% by weight with respect to the total weight of the composition, said additional components being:
- benzoin or PhCH(OH)C(O)Ph in a quantity ranging from 0.30 to 0.70% by weight with respect to the total weight of the composition;
- polyethylene wax in a quantity ranging from 0.10 to 0.30% by weight with respect to the total weight of the composition;
- polyacrylate in a quantity ranging from 0.10 to 1% by weight with respect to the total weight of the composition.

7. The coating composition according to one or more of the previous claims, wherein the composition consists of:
- an unsaturated polyamide having an OH number < 5 mg KOH/g, an acidity number of 20-50 mg KOH/g, a viscosity ranging from 2.5 to 4.5 Pa.s (2,500 to 4,500 cP) at 200°C, a Tg ranging from 52°C to 60°C and a melting temperature ranging from 60°C to 70°C in a quantity ranging from 50 to 98% by weight with respect to the total weight of the composition;
- dicumyl peroxide in a quantity ranging from 0.8 to 1.0% by weight with respect to the total weight of the composition;
- tert-butyl-hydroquinone in a quantity ranging from 0.05 to 0.10% by weight with respect to the total weight of the composition;
- pigment and/or filler in a quantity ranging from 0 to 48% by weight with respect to the total weight of the composition;
- benzoin or PhCH(OH)C(O)Ph in a quantity ranging from 0.40 to 0.70% by weight with respect to the total weight of the composition;
- polyethylene wax in a quantity ranging from 0.20 to 0.30% by weight with respect to the total weight of the composition;
- polyacrylate in a quantity ranging from 0.40 to 1.00% by weight with respect to the total weight of the composition.

8. The coating composition according to one or more of the previous claims, wherein the unsaturated polyamide has a hydroxyl number < 5 mg KOH/g, an acidity number ranging from 35 to 50 mg KOH/g, a viscosity ranging from 2.5 to 3.7 Pa.s (2,500 to 3,700 centiPoise) at 200°C, a Tg ranging from 54 to 58°C, a melting temperature ranging from 60 to 67°C, with a number of unsaturations, expressed as molecular weight per double bond, ranging of from 150 to 2000.

9. The coating composition according to claim 8, wherein the unsaturated polyamide has a number of unsaturations, expressed as molecular weight per double bond, ranging of from 400 to 1800.

10. A process for the production of a coating composition in thermosetting powder according to any of the claims from 1 to 9, which comprises the following steps:
a) dry mixing of all or part of the components of the coating composition;
b) extrusion at a temperature lower than or equal to 100°C for residence times of less than 1 minute, optionally with dosage at the head of the extruder of the components of the composition not mixed in step a);
c) rapid cooling, bringing the material coming from step c) at the outlet of a first calender to a temperature lower than 70°C;
d) grinding at a temperature, lower than 30°C.

11. The process according to claim 10, wherein step a) is carried out in a mixer for 30 minutes at 50-150 rpm or in a turbo-mixer for 5 minutes at 1,000 rpm.

12. A coating method of a substrate which comprises the depositing and adhesion of a coating composition in thermosetting powder according to any of the claims from 1 to 9, on the substrate to be coated and polymerization of the coating composition deposited at a temperature ranging from 100 to 120°C, for a time ranging from 5 to 10 minutes.

13. The coating method of a substrate according to claim 12, which comprises depositing and adhesion of said thermosetting powder on the substrate to be coated and the polymerization of the coating composition deposited at a temperature ranging from 100 to 110°C, for a time ranging from 7 to 10 minutes.

14. An article coated with the coating composition in thermosetting powder that can be obtained with the method according to claim 12 or 13.

15. A coating film that can be obtained by radical polymerization initialized by thermal decomposition of a coating composition in thermosetting powder according to one or more of claims 1 to 9.

## Patentansprüche

1. Beschichtungszusammensetzung in wärmehärtbarem Pulver, umfassend:
- ein ungesättigtes Polymer, das aus Polyestern oder Polyamiden oder Gemischen davon ausgewählt ist, wobei das Polymer eine Tg im Bereich von 50 bis 70 °C, eine Viskosität im Bereich von 2 bis 9 Pa.s (2000 bis 9000 cP) bei 200 °C, eine Schmelztemperatur im Bereich von 60 bis 80 °C aufweist, mit polaren funktionellen Gruppen mit einer Säurezahl im Bereich von 20 bis 50 mg KOH/g und mit einer Hydroxylzahl im Bereich von 0 bis 20 mg KOH/g;
- einen Katalysator/Initiator, der ein organisches Peroxid ist, das aus Dialkylperoxycarbonaten, tert-Alkylperoxyestern, di-tert-Alkylperoxyketalen, di-tert-Alkylperoxyethern ausgewählt ist, das eine Halbierungstemperatur nach 10 h im Bereich von 49 °C bis 140 °C aufweist;
- einen ungebundenen Restabsorber, der aus Hydrochinon, 1,4-Dihydroxybenzol und/oder dessen Derivaten oder aus Verbindungen ausgewählt ist, die zur HALS-Familie zählen, welche einen Schmelzpunkt im Bereich von 50 bis 90 °C aufweisen.

2. Beschichtungszusammensetzung nach Anspruch 1, wobei das ungesättigte Polymer ein ungesättigtes Polyamid ist, das durch die Polykondensation von ungesättigten Dicarbonsäuren und monosubstituierten aliphatischen Diaminen oder monosubstituierten cycloaliphatischen Diaminen erhalten wird.

3. Beschichtungszusammensetzung nach einem oder mehreren der vorstehenden Ansprüche, wobei das organische Peroxid aus Benzoylperoxid, tert-Butylperoxyacetat, tert-Butylperoxybenzoat und Dicumylperoxid ausgewählt ist.

4. Beschichtungszusammensetzung nach einem oder mehreren der vorstehenden Ansprüche, wobei der ungebundene Restabsorber tert-Butylhydrochinon (TBHC) ist.

5. Beschichtungszusammensetzung nach einem oder mehreren der vorstehenden Ansprüche, umfassend:
- das ungesättigte Polymer in einer Menge im Bereich von 50 bis 98 Gew.-%, bezogen auf das Gesamtgewicht der Zusammensetzung;
- den Katalysator in einer Menge im Bereich von 0,01 bis 1 Gew.-%, bezogen auf das Gesamtgewicht der Zusammensetzung;
- den ungebundenen Restabsorber in einer Menge im Bereich von 0,01 bis 1 Gew.-%, bezogen auf das Gesamtgewicht der Zusammensetzung;
- das Pigment und/oder den Füller in einer Menge im Bereich von 0 bis 48 Gew.-%, bezogen auf das Gesamtgewicht der Zusammensetzung.

6. Beschichtungszusammensetzung nach einem oder mehreren der vorstehenden Ansprüche, wobei zusätzliche Komponenten in einer Menge vorhanden sind, die höchstens gleich 2 Gew.-%, bezogen auf das Gesamtgewicht der Zusammensetzung, betragen können, wobei die zusätzlichen Komponenten Folgende sind:
- Benzoin oder PhCH(OH)C(O)Ph in einer Menge im Bereich von 0,30 bis 0,70 Gew.-%, bezogen auf das Gesamtgewicht der Zusammensetzung;
- Polyethylenwachs in einer Menge im Bereich von 0,10 bis 0,30 Gew.-%, bezogen auf das Gesamtgewicht der Zusammensetzung;
- Polyacrylat in einer Menge im Bereich von 0,10 bis 1 Gew.-%, bezogen auf das Gesamtgewicht der Zusammensetzung.

7. Beschichtungszusammensetzung nach einem oder mehreren der vorstehenden Ansprüche, wobei die Zusammensetzung aus Folgendem besteht:
- einem ungesättigten Polyamid, das eine OH-Zahl von < 5 mg KOH/g, eine Säurezahl von 20-50 mg KOH/g, eine Viskosität im Bereich von 2,5 bis 4,5 Pa.s (2500 bis 4500 cP) bei 200 °C, eine Tg im Bereich von 52 °C bis 60 °C und eine Schmelztemperatur im Bereich von 60 °C bis 70 °C aufweist, in einer Menge im Bereich von 50 bis 98 Gew.-%, bezogen auf das Gesamtgewicht der Zusammensetzung;
- Dicumylperoxid in einer Menge im Bereich von 0,8 bis 1,0 Gew.-%, bezogen auf das Gesamtgewicht der Zusammensetzung;
- tert-Butylhydrochinon in einer Menge im Bereich von 0,05 bis 0,10 Gew.-%, bezogen auf das Gesamtgewicht der Zusammensetzung;
- Pigment und/oder Füller in einer Menge im Bereich von 0 bis 48 Gew.-%, bezogen auf das Gesamtgewicht der Zusammensetzung;
- Benzoin oder PhCH(OH)C(O)Ph in einer Menge im Bereich von 0,40 bis 0,70 Gew.-%, bezogen auf das Gesamtgewicht der Zusammensetzung;
- Polyethylenwachs in einer Menge im Bereich von 0,20 bis 0,30 Gew.-%, bezogen auf das Gesamtgewicht der Zusammensetzung;
- Polyacrylat in einer Menge im Bereich von 0,40 bis 1,00 Gew.-%, bezogen auf das Gesamtgewicht der Zusammensetzung.

8. Beschichtungszusammensetzung nach einem oder mehreren der vorstehenden Ansprüche, wobei das ungesättigte Polyamid eine Hydroxylzahl von < 5 mg KOH/g, eine Säurezahl im Bereich von 35 bis 50 mg KOH/g, eine Viskosität im Bereich von 2,5 bis 3,7 Pa.s (2500 bis 3700 cP) bei 200 °C, eine Tg im Bereich von 54 bis 58 °C, eine Schmelztemperatur im Bereich von 60 bis 67 °C und einen Grad von Ungesättigtheit, der als Molekulargewicht pro Doppelbindung ausgedrückt ist, im Bereich von 150 bis 2000 aufweist.

9. Beschichtungszusammensetzung nach Anspruch 8, wobei das ungesättigte Polyamid einen Grad von Ungesättigtheit, der als Molekulargewicht pro Doppelbindung ausgedrückt ist, im Bereich von 400 bis 1800 aufweist.

10. Verfahren zur Herstellung einer Beschichtungszusammensetzung in wärmehärtbarem Pulver nach einem der Ansprüche 1 bis 9, das die folgenden Schritte umfasst:
a) Trockenmischen aller oder eines Teils der Komponenten der Beschichtungszusammensetzung;
b) Extrusion bei einer Temperatur kleiner oder gleich 100 °C für Verweilzeiten von unter 1 Minute, gegebenenfalls mit Dosierung der Komponenten der Zusammensetzung, die in Schritt a) nicht vermischt wurden, am Extruderkopf;
c) rasches Abkühlen, wodurch das Material aus Schritt c) am Auslass eines ersten Kalanders auf eine Temperatur unter 70 °C gebracht wird;
d) Mahlen bei einer Temperatur unter 30 °C.

11. Verfahren nach Anspruch 10, wobei Schritt a) 30 Minuten lang mit 50-150 U/min in einem Mischer oder 5 Minuten lang bei 1000 U/min in einem Turbomischer durchgeführt wird.

12. Beschichtungsverfahren eines Substrats, das das Abscheiden und die Adhäsion einer Beschichtungszusammensetzung in wärmehärtbarem Pulver nach einem der Ansprüche 1 bis 9 auf dem zu beschichteten Substrat und die Polymerisation der abgeschiedenen Beschichtungszusammensetzung bei einer Temperatur im Bereich von 100 bis 120 °C über einen Zeitraum im Bereich von 5 bis 10 min umfasst.

13. Beschichtungsverfahren eines Substrats nach Anspruch 12, das das Abscheiden und die Adhäsion des wärmehärtbaren Pulvers auf dem zu beschichtenden Substrat und die Polymerisation der abgeschiedenen Beschichtungszusammensetzung bei einer Temperatur im Bereich von 100 bis 110 °C über einen Zeitraum im Bereich von 7 bis 10 Minuten umfasst.

14. Fabrikat, das mit der Beschichtungszusammensetzung in wärmehärtbarem Pulver beschichtet ist, das über das Verfahren nach Anspruch 12 oder 13 erhalten werden kann.

15. Beschichtungsfilm, der über radikalische Polymerisation erhalten werden kann, die durch den Wärmeabbau einer Beschichtungszusammensetzung in wärmehärtbarem Pulver nach einem oder mehreren der Ansprüche 1 bis 9 ausgelöst wird.

## Revendications

1. Composition de revêtement en poudre thermodurcissable, comprenant :
- un polymère insaturé sélectionné parmi les polyesters ou les polyamides ou leurs mélanges, ledit polymère ayant une Tg comprise entre 50 et 70°C, une viscosité comprise entre 2 et 9 Pa.s (de 2 000 à 9 000 centipoises) à 200°C, une température de fusion comprise entre 60 et 80°C, avec des groupes fonctionnels polaires ayant un indice d'acidité compris entre 20 et 50 mg de KOH/g, et avec un indice d'hydroxyle compris entre 0 et 20 mg de KOH/g ;
- un catalyseur/initiateur qui est un peroxyde organique sélectionné parmi les peroxycarbonates de di-alkyle, les peroxyesters de tert-alkyle, les peroxy-cétals de di-tert-alkyle, les peroxy-éthers de di-tert-alkyle, ayant une température de réduction de moitié après 10 heures comprise entre 49°C et 140°C;
- un absorbeur de radicaux libres qui est sélectionné parmi l'hydroquinone, le 1,4-dihydroxybenzène et/ou ses dérivés, ou les composés appartenant à la famille des photo-stabilisants à amine encombrée (HALS) ayant un point de fusion compris entre 50 et 90 °C.

2. Composition de revêtement selon la revendication 1, dans laquelle le polymère insaturé est un polyamide insaturé obtenu par la polycondensation d'acides dicarboxyliques insaturés et de diamines aliphatiques monosubstituées ou de diamines cycloaliphatiques monosubstituées.

3. Composition de revêtement selon l'une ou plusieurs des revendications précédentes, dans laquelle le peroxyde organique est sélectionné parmi le peroxyde de benzoyle, le peroxyacétate de tert-butyle, le peroxybenzoate de tert-butyle et le peroxyde de dicumyle.

4. Composition de revêtement selon l'une ou plusieurs des revendications précédentes, dans laquelle l'absorbeur de radicaux libres est la tert-butylhydroquinone (TBHC).

5. Composition de revêtement selon l'une ou plusieurs des revendications précédentes, comprenant :
- le polymère insaturé dans une quantité comprise entre 50 et 98 % en poids par rapport au poids total de la composition ;
- le catalyseur dans une quantité comprise entre 0,01 et 1 % en poids par rapport au poids total de la composition ;
- l'absorbeur de radicaux libres dans une quantité comprise entre 0,01 et 1% en poids par rapport au poids total de la composition ;
- le pigment et/ou la charge dans une quantité comprise entre 0 et 48 % en poids par rapport au poids total de la composition.

6. Composition de revêtement selon l'une ou plusieurs des revendications précédentes, dans laquelle des constituants additionnels sont présents dans une quantité qui, au maximum, peut être égale à 2 % en poids par rapport au poids total de la composition, lesdits constituants additionnels étant :
- de la benzoïne ou PhCH(OH)C(O)Ph dans une quantité comprise entre 0,30 et 0,70 % en poids par rapport au poids total de la composition ;
- de la cire de polyéthylène dans une quantité comprise entre 0,10 et 0,30 % en poids par rapport au poids total de la composition ;
- du polyacrylate dans une quantité comprise entre 0,10 et 1 % en poids par rapport au poids total de la composition.

7. Composition de revêtement selon l'une ou plusieurs des revendications précédentes, la composition étant constituée par :
- un polyamide insaturé ayant un indice OH < 5 mg de KOH/g, un indice d'acidité de 20 à 50 mg de KOH/g, une viscosité comprise entre 2,5 et 4,5 Pa.s (de 2 500 à 4 500 cP) à 200°C, une Tg comprise entre 52°C et 60°C et une température de fusion comprise entre 60°C et 70°C dans une quantité comprise entre 50 et 98 % en poids par rapport au poids total de la composition ;
- du peroxyde de dicumyle dans une quantité comprise entre 0,8 et 1,0 % en poids par rapport au poids total de la composition ;
- de la tert-butylhydroquinone dans une quantité comprise entre 0,05 et 0,10 % en poids par rapport au poids total de la composition ;
- un pigment et/ou une charge dans une quantité comprise entre 0 et 48 % en poids par rapport au poids total de la composition ;
- de la benzoïne ou PhCH(OH)C(O)Ph dans une quantité comprise entre 0,40 et 0,70 % en poids par rapport au poids total de la composition ;
- de la cire de polyéthylène dans une quantité comprise entre 0,20 et 0,30 % en poids par rapport au poids total de la composition ;
- du polyacrylate dans une quantité comprise entre 0,40 et 1,00 % en poids par rapport au poids total de la composition.

8. Composition de revêtement selon l'une ou plusieurs des revendications précédentes, dans laquelle le polyamide insaturé a un indice d'hydroxyle < 5 mg de KOH/g, un indice d'acidité compris entre 35 et 50 mg de KOH/g, une viscosité comprise entre 2,5 et 3,7 Pa.s (de 2 500 à 3 700 centipoises) à 200°C, une Tg comprise entre 54 et 58°C, une température de fusion comprise entre 60 et 67°C, avec un nombre d'insaturations, exprimé en poids moléculaire par double liaison, compris entre 150 et 2 000.

9. Composition de revêtement selon la revendication 8, dans laquelle le polyamide insaturé a un nombre d'insaturations, exprimé en poids moléculaire par double liaison, compris entre 400 et 1 800.

10. Procédé de production d'une composition de revêtement en poudre thermodurcissable définie selon l'une quelconque des revendications 1 à 9, qui comprend les étapes suivantes :
a) mélange à sec de tout ou partie des constituants de la composition de revêtement ;
b) extrusion à une température inférieure ou égale à 100°C pour des temps de séjour inférieurs à 1 minute, facultativement avec un dosage à la tête de l'extrudeuse des constituants de la composition non mélangés à l'étape a) ;
c) refroidissement rapide, amenant la matière issue de l'étape c) à la sortie d'une première calandre à une température inférieure à 70°C ;
d) broyage à une température inférieure à 30°C.

11. Procédé selon la revendication 10, dans lequel l'étape a) est effectuée dans un mélangeur pendant 30 minutes à une vitesse de 50 à 150 tr/min ou dans un turbo-mélangeur pendant 5 minutes à 1 000 tr/min.

12. Procédé de revêtement d'un substrat qui comprend le dépôt et l'adhésion d'une composition de revêtement en poudre thermodurcissable définie selon l'une quelconque des revendications 1 à 9 sur le substrat à revêtir et la polymérisation de la composition de revêtement déposée à une température comprise entre 100 et 120°C, pendant une durée comprise entre 5 et 10 minutes.

13. Procédé de revêtement d'un substrat selon la revendication 12, qui comprend le dépôt et l'adhésion de ladite poudre thermodurcissable sur le substrat à revêtir et la polymérisation de la composition de revêtement déposée à une température comprise entre 100 et 110°C, pendant une durée comprise entre 7 et 10 minutes.

14. Article revêtu avec la composition de revêtement en poudre thermodurcissable qui peut être obtenue par le procédé défini selon la revendication 12 ou 13.

15. Film de revêtement qui peut être obtenu par polymérisation radicalaire initialisée par décomposition thermique d'une composition de revêtement en poudre thermodurcissable définie selon l'une ou plusieurs des revendications 1 à 9.
